# EUROPEAN PATENT APPLICATION

(11) **EP 1 544 042 A1**
(43) Date of publication of application: **22.06.2005**
(21) Application number: 03258076.3
(22) Date of filing: 19.12.2003
(51) Int. Cl.: B60R 16/02, B60Q 11/00, B60Q 1/46, G01R 31/00, G01R 19/00

(54) **Control circuit for controlling the supply of power to hazard warning lamps**

(71) Applicant: Nissan Technical Centre Europe Ltd, Cranfield, Bedfordshire MK43 ODB (GB)
(72) Inventor: Savage, Neil, Nissan Technical Centre Europe Ltd, Cranfield, Bedforshire MK43 ODB (GB)
(74) Representative: Neobard, William John

(57) **Abstract**

A method of controlling the supply of power to plural hazard warning lamps (10,12) of a motor vehicle or the like comprises outputting current for operating the hazard lamps so as to be simultaneously illuminated, wherein said step of outputting current is arranged such that a respective one of said lamps is powered at a time when one or more other of said lamps is powered, whereby information indicative of current output for each of said lamps can be obtained.

## Description

The present invention relates to a control circuit and control method for monitoring the power supplied for hazard warning lights on a vehicle, or the like.

It is currently common practice to illuminate both sets of direction indicator lamps on a vehicle for hazard warning purposes. It is also currently a regulatory requirement to inform a driver if direction indicator lamps when used for the purpose of direction indication are not operating correctly.

One of the earliest techniques for providing this information to a driver was derived from the early thermally operated relay devices which were adapted to both provide an audible warning of bulb failure and also to flash the remaining bulb at twice the normal frequency if one of the bulbs failed.

More modem vehicles tend to use electronic control systems rather than relays to control the operation of direction indicators as direction indicators, and as hazard warning lamps. To that effect it has been found necessary to monitor the current flow towards the direction indicators, comparing the current which is flowing with an expected range of current that corresponds to normal operation. If the current flow falls below the minimum expected level, then a signal is provided to the control unit to cause the remaining indicators to flash at high speed when actuated and to provide some audible warning or some visual warning to the driver. Given the fact that currents in a vehicle are generally analog and the electronic control unit is generally digital, it is clearly necessary to use some form of analog-to-digital converter to provide the relevant information to the electronic control unit.

It would be desirable for safety reasons to indicate to a driver either the situation that one of the indicator lamps has failed when the indicators are being used as hazard warning lamps or to indicate an over-current condition while the direction indicators are being used as hazard warning lamps. It would also be desirable to use only a single analog-to-digital converter for converting the sensed current in the hazard warning lamp operating circuitry, for example for reasons of reducing pin count and for economic reasons. Clearly while a single sensor device is capable of providing an indication of failure of an individual lamp when only that lamp is being operated - as for example in the direction indicator mode - it may not be possible for a single sensor to monitor the operation of two lamps that are being illuminated at the same time.

According to one aspect of the invention there is provided a method of operating plural hazard warning lamps of a motor vehicle or the like, the method comprising sending control data for operating the plural hazard lamps such that one of said lamps is powered at a time when another of said lamps is not powered whereby information indicative of operation of each of said lamps can be conveyed over a single monitoring channel.

According to another aspect of the invention there is provided a method of controlling the supply of power to plural hazard warning lamps of a motor vehicle or the like, the method comprising outputting current for operating the hazard lamps so as to be simultaneously illuminated, wherein said step of outputting current is arranged such that a respective one of said lamps is powered at a time when one or more other of said lamps is powered, whereby information indicative of current output for each of said lamps can be obtained.

In an embodiment, the method further comprises sensing the current supplied and comparing a sensed value against a first threshold to determine whether a powered lamp has failed.

In an embodiment, the method further comprises providing an output signal indicative of failure of said powered lamp.

In an embodiment, the method further comprises sensing the current supplied and comparing a sensed value against a second threshold to determine whether an over-current condition exists.

In an embodiment, the method further comprises at least limiting current for a lamp for which an over-current has been detected.

In an embodiment, the sensing step is performed by a sensing arrangement common to said plural hazard warning lamps.

In an embodiment, said sensing arrangement has a sensing range suitable for only one lamp.

In an embodiment, said power is supplied cyclically, wherein in one cycle one of said lamps is powered at a time when the or each respective remaining lamp is not powered, and in a subsequent cycle, a different one of said lamps is powered at a time when the or each respective remaining lamp is not powered.

In an embodiment, said power is supplied cyclically, wherein in each cycle each of said lamps is not powered at a time when the or each respective remaining lamp is powered.

In an embodiment, the method further comprises disregarding sensed values while current is being output to said plural lamps at the same time.

According to another aspect of the invention there is provided apparatus for controlling the supply of power to plural hazard warning lamps of a motor vehicle or the like, the apparatus comprising
a switch device for outputting current for operating the hazard lamps, and a control device for controlling said switch device such that the hazard lamps are simultaneously illuminated, said control device being arranged to output current such that a respective one of said lamps is powered at a time when one or more other of said lamps is powered, whereby information indicative of current output by said switch device for each of said lamps can be obtained.

In an embodiment, the control device has an input for sensing faults, the said input being responsive to digital signals, the apparatus further comprising a sensor device for sensing the current supplied by the switch device and a converter device for converting an analog output of the sensor device to a digital representation thereof, said converter device having a digital output for said fault-sensing input of the control device.

In an embodiment, the apparatus further comprises comparator circuitry for comparing a sensed value of current against a first threshold to determine whether a powered lamp has failed.

In an embodiment, the control device is arranged to provide an output signal indicative of failure of said powered lamp.

In an embodiment, the comparator circuitry is further arranged to compare the sensed value against a second threshold to determine whether an over-current condition exists.

In an embodiment, the control device is arranged to at least limit current for a lamp for which an over-current has been detected.

In an embodiment, said converter device is common to said plural hazard warning lamps.

In an embodiment, said control device is arranged to supply power cyclically, wherein in one cycle one of said lamps is powered at a time when the or each respective remaining lamp is not powered, and in a subsequent cycle, a different one of said lamps is powered at a time when the or each respective remaining lamp is not powered.

In an embodiment, said control device is arranged to supply power cyclically, wherein in each cycle each of said lamps is not powered at a time when the or each respective remaining lamp is powered.

In an embodiment, said control device is arranged to disregard signals at said fault-sensing input while said control device is controlling said switch device to output power to more than one lamp at the same time.

In an embodiment, said control device is arranged to output current in common to said plural lamps until signals at said fault-sensing input indicate that a fault has occurred.

Exemplary embodiments of the invention will now be described with reference to the accompanying drawings, in which:
Figure 1 shows a block circuit diagram of a indicator/hazard lamp operating circuit embodying the invention;
Figure 2 shows a block circuit diagram of a second indicator/hazard lamp operating circuit embodying the invention;
Figure 3 shows waveforms of the circuit of Figure 1 when operating indicator lamps;
Figure 4 shows a deficiency in a prior art device;
Figure 5 shows waveforms of the circuit of Figure 1 when operating hazard lamps using a method embodying the invention; and
Figure 6 shows waveforms of the circuit of Figure 1 when operating hazard lamps using another method embodying the invention.

An often-used vehicle architecture, and one addressed by the present invention, is to operate on one side of a vehicle the rear and front indicator lamps and in appropriate cases a side repeater, to indicate an intention to change direction. In this case, substantially simultaneous operation of both sides, back and front, is taken as a hazard warning.

In many operating devices for such lamps, the front and rear sets of lamps are connected to separate forward and rear arms of a wiring harness. In some instances a single power switch- e.g. a power FET or the like- controls both the front and rear lamps for one side: in others each single switch operates only as respective one of the front and rear lamps, so that for operation of two front and two rear lamps, four switches are required.

The presently-described embodiments address the latter situation. The invention is not however so restricted.

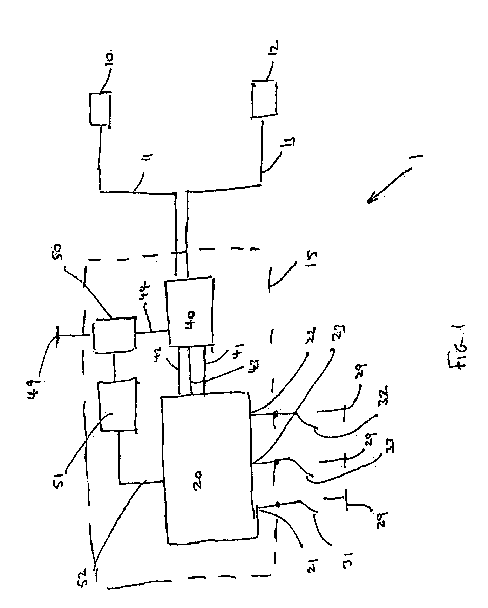

Referring first to Figure 1 - an indicator lamp operating circuit capable of operating indicator lamps (10, 12) as hazard warning lamps will now be described. In the present embodiment only the rear indicator/ hazard warning lamps are shown: a similar set up is used for the front lamps.

The operating circuit has a control device (15) connected via respective wiring (11, 13) to the rear indicator lamps (10, 12). Actuating switches (31, 32, 33) selectively connect respective input nodes (21, 22, 23) of a control circuit,(20) here a digital processing device, to earth (29). A first actuating switch (31) causes the control circuit (20) to intermittently supply power to a first conductor (11) to intermittently illuminate the right hand indicator lamp (10). This is achieved via a power switch (40) connected to supply power from a battery terminal (49) to the conductor (11) in accordance with a control pulse provided from the control circuit (20) over a first line (41) connecting the control circuit (20) to the power switch (40).

Alternatively a second actuating switch (32) when actuated to connect the second input node (22) of the control circuit (20) to earth (29) causes, instead of pulses on the first line (41), pulses on a second line (42) to the switch (40) whereby the power switch (40) applies current to a second conductor (13) for intermittently illuminating the left hand indicator lamp (12).

Finally operation of a third actuating switch (33) to connect a third input node (23) of the control circuit (20) to earth causes pulses to be output only over a third line (43) to the power switch (40) and this in turn causes output of current over both the conductors (11, 13) intermittently but at substantially the same time so that both the right and left indicator lamps (10, 12) are illuminated at least substantially simultaneously and intermittently.

Although for ease of explanation the actuating switches (31-33) have been described as independent switches, it will of course be clear to those skilled in the art that fewer than three independent switches may be provided. Similarly although the connection from the control circuit (20) to the power switch (40) has been described as using three conductors (41-43) other arrangements are possible. For example only two conductors (41, 42) could be provided in which case the control circuit (20) would simultaneously provide pulses on both of these conductors so as to provide the hazard warning function. Equally, the description above has the actuating switches connecting selectively to earth- this is not an essential feature, and connection to a power line, or to a potential intermediate the power potential and earth is possible according to the design adopted.

In the presently described arrangement the power switch (40) is connected to the battery terminal (49) via a sensing device (50) which provides an output to an analog-to digital converter (hereinafter ADC) (51), in turn having a digital output to a fourth terminal (52) of the control circuit (20). Sensing device (50) in this embodiment includes a current mirror device which provides as a controlled current an output mirroring the current in its control path provided via line (44) to the power switch (40), and hence the current output from the switch (40). As known to those skilled in the art, a current mirror may provide an exact match to current flowing in its control path, and although this is a feasible ratio, embodiments aimed at reduction of current consumption have a mirrored current which is substantially proportional to the current in the control path but which is very much less than the current in the control path.

The control circuit (20) is arranged to compare the output of the ADC (51) against a lower threshold. When the indicator lamps are being operated as indicator lamps rather than hazard warning lamps, the comparison indicates undercurrent as indicative of lamp failure. Lamp failure may be signalled by the control circuit (20) providing an audible indication to the driver, (for example by rapid clicking sounds), a visual indication to the driver (for example double-speed flashing of the repeater lamp on the dashboard) and by causing the remaining indicator lamp to flash at double-speed. In some vehicles, an alternative lamp is used, which may be a lamp specially for this purpose or alternatively another lamp used in another lighting unit, for example a parking light, or a driving light.

The control circuit (20) is also arranged to compare the output (52) of the ADC (51) against an upper threshold. Exceeding this threshold is sensed as over-current. Where an over-current is identified, the control circuit (20) interprets that a short circuit has occurred and disables output to the conductor where the over-current is identified via the switch (40) whilst providing an indication of the problem to the driver - for example illuminating the repeater lamp on the dashboard constantly.

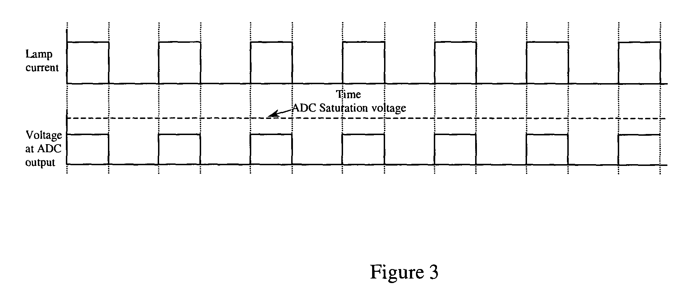

Referring to Figure 3, to achieve maximum sensitivity the ADC (51) is dimensioned such that an sensed input current corresponding to a normal operating current causes the ADC output (52) to be close to saturation, when the battery voltage is at its maximum and that the resistance of an indicator lamp is at its minimum (for example in cold conditions). This sensitivity is chosen to allow for the situation where the minimum battery voltage occurs while the indicator lamps have maximum. This situation, where the current supplied is a minimum, still requires an ADC output that is high enough to be sensed as "non- fault".

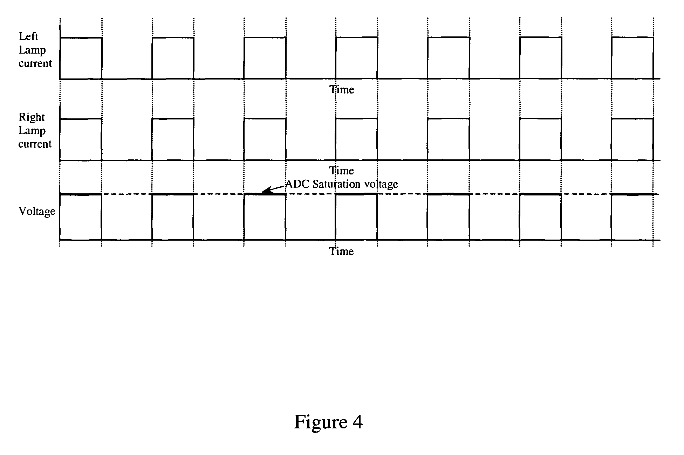

Referring to Figure 4, where the ADC is so dimensioned, given the fact that the ADC (51) is already close to saturation with one lamp, as soon as the indicator lamps (10, 12) are operated simultaneously as hazard warning lamps, the ADC (51) saturates. It will be understood that the failure of an individual indicator lamp in the hazard warning mode cannot be localised to one of the lamps using the circuit shown in Figure 1, when operated as above.

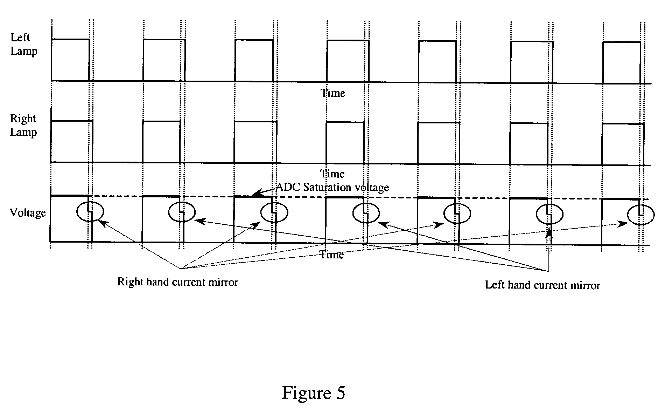

Accordingly in accordance with the invention the operation of the control circuit (20) is such that during the hazard warning mode it provides control data for operating the plural hazard lamps such that one of said lamps is powered at a time when another of said lamps is not powered whereby information indicative of operation of each of said lamps can be conveyed over a single monitoring channel. This control data is effective on the way power is output from the switch (40) to lines (11, 13). Power is thus supplied over one of lines (11, 13) at a time when power is not supplied over the other of lines (11, 13). Given the occurrence of cyclical operation, in one embodiment, shown in Figure 5, power is supplied over one line for a short period less than that for which power is supplied over the other line during a first "flash", and for the next flash power is supplied over the other line for a short period less than the first line. The "underlap time" during which only one lamp is powered is selected to be sufficiently short that there will be virtually no perceived difference between the flashes from one lamp and flashes from the other. In one embodiment, the "underlap time" is the time taken for two cycles of the ADC (51).

In another embodiment during a first flash where the first conductor (11) is supplied permanently with current, the current to the second conductor (13) is interrupted or chopped after the lamp has become illuminated for a sufficiently short time that the perception remains that the lamp (12) remains illuminated throughout the flash. As those skilled in the art will appreciate, each lamp continues to glow after current to it is cut off, due to its thermal inertia. During the next flash, current is supplied permanently over the second conductor (13) and the current supplied over the first line (11) is interrupted in the same way.

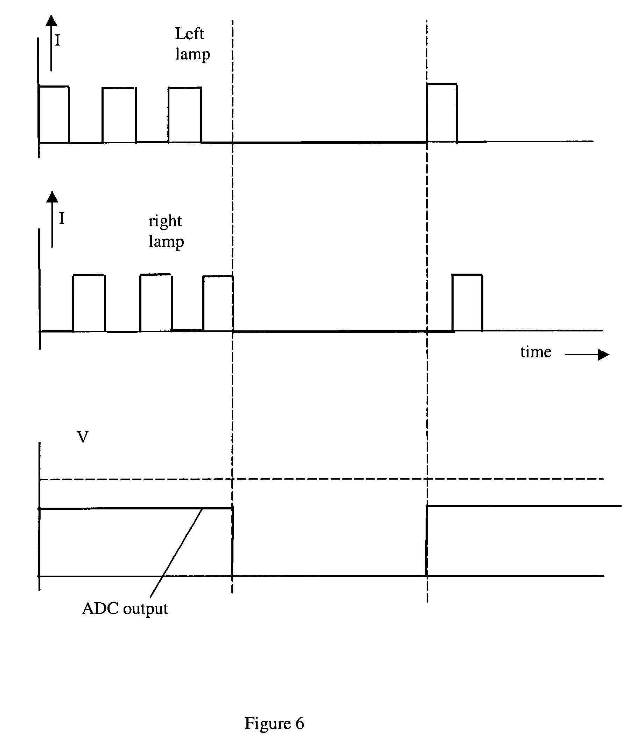

Other operating modes will be clear to the person skilled in the art, for example for each flash it would be possible to have a chopped supply for each of the indicator lamps, with power being supplied instantaneously to each indicator lamp only when power is not being supplied to the respective other indicator lamp. This is shown in Figure 6.

By providing power differentially to the two lamps the control circuit (20) can discriminate which indicator lamp has failed if lamp failure occurs during the hazard warning operation. Equally whereas in the normal operating mode the fault input (52) is disabled during the hazard warning mode so that it is unable to sense over-currents, adoption of the technique discussed above enables over-currents to be detected and to be localised to one or other of the indicator lamp drive paths. To that end, in an embodiment, the control circuit (20) disables the fault-monitoring input (52) so long as power is supplied simultaneously to both right and left indicator lamps (10, 12) for hazard warning purposes, and enables the fault reporting input for each period during the hazard warning mode that power is supplied to one only of the indicator lamps (10, 12).

It is of course not essential to have a power sensor separate from the switch, as shown in Figure 1, and in many embodiments a switch having integral current sensing is used, as these are widely available. Where such current sensing switches are used, each switch has only a single pole and is thus capable of operating only a single conductor.

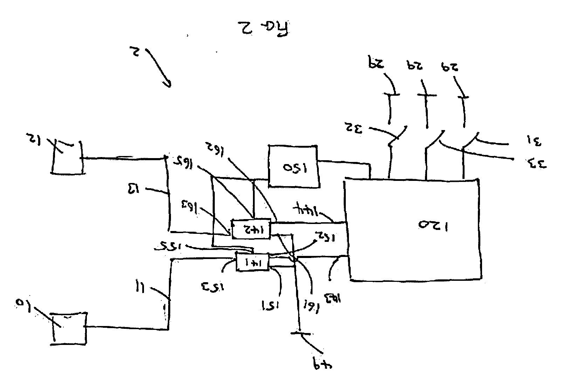

Such an arrangement is shown in figure 2, where two switches (141, 142) are provided, each operating a respective conductor (11,13). Each switch has a respective control input (152, 162), a respective main current path output node (153, 163) and a respective current mirror output node (155,165), as well as a respective power node (151,161) As shown the power nodes (151,161) are connected in common to the supply rail (49). Each switch (141,142) has its control input connected to a respective output node (143,144) of a control circuit (120). The current mirror outputs (155, 165) are commoned together to the input of an ADC (150) so that the output of the ADC represents the sum of any currents at its input. Where the ADC is a voltage sensing device, the currents form the current mirror outputs can be summed at a summing resistance (not shown).

Embodiments of the invention have now been described. The invention is not however to be limited to the features of the embodiment, but instead extends to the full scope of the appended claims.

## Claims

1. A method of operating plural hazard warning lamps of a motor vehicle or the like, the method comprising creating control data for operating the plural hazard lamps such that one of said lamps is powered at a time when another of said lamps is not powered whereby information indicative of operation of each of said lamps can be conveyed over a single monitoring channel.

2. A method of controlling the supply of power to plural hazard warning lamps of a motor vehicle or the like, the method comprising
outputting current for operating the hazard lamps so as to be simultaneously illuminated, wherein said step of outputting current is arranged such that a respective one of said lamps is powered at a time when one or more other of said lamps is powered, whereby information indicative of current output for each of said lamps can be obtained.

3. A method as claimed in claim 2, further comprising sensing the current supplied and comparing a sensed value against a first threshold to determine whether a powered lamp has failed.

4. A method as claimed in claim 2 or 3, further comprising providing an output signal indicative of failure of said powered lamp.

5. A method as claimed in claim 4, further comprising sensing the current supplied and comparing a sensed value against a second threshold to determine whether an over-current condition exists.

6. A method as claimed in any of claims 2 to 5, further comprising at least limiting current for a lamp for which an over-current has been detected.

7. A method as claimed in any of claims 2 to 6, wherein the sensing step is performed by a sensing arrangement common to said plural hazard warning lamps.

8. A method as claimed in any of claims 2 to 7, wherein said sensing arrangement has a sensing range suitable for only one lamp.

9. A method as claimed in any of claims 2 to 8, wherein said power is supplied cyclically, wherein in one cycle one of said lamps is powered at a time when the or each respective remaining lamp is not powered, and in a subsequent cycle, a different one of said lamps is powered at a time when the or each respective remaining lamp is not powered.

10. A method as claimed in any of claims 2 to 8, wherein said power is supplied cyclically, wherein in each cycle each of said lamps is not powered at a time when the or each respective remaining lamp is powered.

11. A method as claimed in any of claims 2 to 10, further comprising disregarding sensed values while current is being output to said plural lamps at the same time.

12. Apparatus for controlling the supply of power to plural hazard warning lamps of a motor vehicle or the like, the apparatus comprising
a switch device for outputting current for operating the hazard lamps, and a control device for controlling said switch device such that the hazard lamps are simultaneously illuminated, said control device being arranged to output current such that a respective one of said lamps is powered at a time when one or more other of said lamps is powered, whereby information indicative of current output by said switch device for each of said lamps can be obtained.

13. Apparatus as claimed in claim 12, wherein the control device has an input for sensing faults, the said input being responsive to digital signals, the apparatus further comprising a sensor device for sensing the current supplied by the switch device and a converter device for converting an analog output of the sensor device to a digital representation thereof, said converter device having a digital output for said fault-sensing input of the control device.

14. Apparatus as claimed in claim 12 or 13, wherein the control device is arranged to provide an output signal indicative of failure of said powered lamp.

15. Apparatus as claimed in claim 12, 13 or 14, comprising comparator circuitry for comparing a sensed value of current against a first threshold to determine whether a powered lamp has failed.

16. Apparatus as claimed in claim 15, wherein the comparator circuitry is further arranged to compare the sensed value against a second threshold to determine whether an over-current condition exists.

17. Apparatus as claimed in any of claims 12 to 16, wherein the control device is arranged to at least limit current for a lamp for which an over-current has been detected.

18. Apparatus as claimed in any of claims 12 to 16, wherein said converter device is common to said plural hazard warning lamps.

19. Apparatus as claimed in any of claims 12 to 18, wherein said control device is arranged to supply power cyclically, wherein in one cycle one of said lamps is powered at a time when the or each respective remaining lamp is not powered, and in a subsequent cycle, a different one of said lamps is powered at a time when the or each respective remaining lamp is not powered.

20. Apparatus as claimed in any of claims 12 to 19, wherein said control device is arranged to supply power cyclically, wherein in each cycle each of said lamps is not powered at a time when the or each respective remaining lamp is powered.

21. Apparatus as claimed in any of claims 12 to 20, wherein said control device is arranged to disregard signals at said fault-sensing input while said control device is controlling said switch device to output power to more than one lamp at the same time.

22. Apparatus as claimed in any of claims 12 to 21, wherein said control device is arranged to output current in common to said plural lamps until signals at said fault-sensing input indicate that a fault has occurred.
